# EUROPÄISCHE PATENTSCHRIFT

(11) **EP 0 401 240 B1**
(45) Veröffentlichungstag und Bekanntmachung des Hinweises auf die Patenterteilung: **25.05.1994**
(21) Anmeldenummer: 89902218.0
(22) Anmeldetag: 14.02.1989
(51) Int. Cl.: B06B 1/04, G01M 7/00, F16F 7/10

(54) **SCHWINGERREGER**
VIBRATION GENERATOR
GENERATEUR DE VIBRATIONS

(30) Priorität: 23.02.1988 AT 435/88
(43) Veröffentlichungstag der Anmeldung: 12.12.1990
(73) Patentinhaber: ELIN-UNION Aktiengesellschaft für elektrische Industrie, A-1141 Wien (AT)
(72) Erfinder: WOLF, Helmut, A-2120 Obersdorf (AT); GREDLER, Erich, A-1220 Wien (AT)
(74) Vertreter: Krause, Peter
(86) Internationale Anmeldenummer: AT8900012
(87) Internationale Veröffentlichungsnummer: WO8907987

(56) Entgegenhaltungen:
- DE-A- 3 316 242
- DE-C- 228 586
- FR-A- 1 507 163
- GB-A- 946 589

## Beschreibung

Die Erfindung betrifft einen Schwingerreger, der einen Magnetkörper mit Feldspulen aufweist, in dem der Arbeitstisch mit der Schwingspule, die von einem Leistungsverstärker mit Energie versorgt wird, in einem Gestell angeordnet ist, wobei der Magnetkörper über ein tief abgestimmtes Federsystem mit dem Gestell verbunden ist.

Schwingprüf-Systeme werden beispielsweise in den Bereichen Forschung, Entwicklung, Fertigung bzw. Wartung eingesetzt, um Prüfungen von Bauteilen, Geräten etc. unter deren späteren Einsatzbedingungen durchführen zu können. Diese Schwingprüf-Systeme bestehen einerseits aus dem Leistungsteil und anderseits aus dem Meß-, Regel- und Steuerteil, wobei der Leistungsteil in den Leistungsverstärker, den Schwingerreger, die Feldversorgungseinheit und die Kühleinheit untergliedert wird.

Der vorwiegend in elektrodynamischer Bauart ausgeführte Schwingerreger weist den Magnetkörper mit den Feldspulen auf, in dem der Arbeitstisch mit der Schwingspule, die vom Leistungsverstärker mit Energie versorgt wird, angeordnet ist. Über die Aufhängung des Magnetkörpers im Gestell werden die Reaktionskräfte der im Betrieb des Systems entstehenden Schubkräfte in das Fundament geleitet. Bisher war der Kraftfluß über das Mittelstück, Federn, Schwenkzapfen, Lagerschild, Gestellwange in das Fundament gegeben. Diese Aufhängung wird auch als tief abgestimmtes Federsystem bezeichnet. Als Nachteile bei diesem konstruktivem Aufbau erwiesen sich einerseits die Einschränkung des Nutzhubes sowie anderseits bei mechanischer Überbrückung der Federn die auftretenden Gestellresonanzen.

Aus der FR-A 1507 163 ist ein hydraulisches Entlastungssystem des bewegten Teiles eines Schwingerregers bekannt, welches pneumatisch angesteuert wird.

Darüber hinaus ist aus der DE-C 228 586 ein Schwingungstilger mit einem regelbaren Dämpfer bekannt. Durch den Schwingungstilger wird der Aufbau einer Resonanzerscheinung gestört. Da jedoch die Zusatzmasse des Schwingungstilgers mit seiner Feder bei einer bestimmten Frequenz selbst als Resonator wirkt, wurde der Zusatzdämpfer angeordnet.

Aufgabe der Erfindung ist es daher, einen Schwingerreger der eingangs zitierten Art zu schaffen, der im praktischen Betrieb keinen Einschränkungen unterliegt, d. h., daß über die volle Betriebsfrequenz die Gestellresonanzen ausgespart werden und der volle Tischhub laut Betriebsdiagramm gefahren werden kann.

Der erfindungsgemäße Schwingerreger ist dadurch gekennzeichent, daß der Magnetkörper über ein weiteres hoch abgestimmtes Federsystem mit dem Gestell verbunden ist und daß dieses Federsystem zu- oder abschaltbar ist. Mit der Erfindung ist es erstmals möglich, die Reaktionskräfte der Schubkräfte je nach Betriebsfrequenz über zwei verschiedene Pfade in das Fundament zu leiten.

Grundsätzlich stellt sich die Anordnung als eine Masse, nämlich der Magnetkörper dar, welche mit einer Kraft wechselnder Frequenz, nämlich der Reaktionskraft der Schubkraft, angeregt wird und die auf zwei Federn mit stark verschiedener Federsteife abgestützt wird, wobei das Federsystem das tief abgestimmt ist, also die kleinere Federsteife aufweist, überbrückt werden kann. Es ist dadurch möglich, im unteren Frequenzbereich in starrer Verbindung des Magnetkörpers mit der seismischen Masse zu fahren. Bevor sich nun mit steigender Frequenz ein merkbarer Anstieg der Amplituden infolge einer Gestellresonanz ankündigt, wird die Überbrückung des tief abgestimmten Federsystems gelöst und somit der Magnetkörper von diesem Federsystem gehalten.

Nach einem weiteren Merkmal der Erfindung erfolgt die Zu- bzw. Abschaltung des hoch abgestimmten Federsystems im weichen, mechanisch geräuschlosen Übergang. Da ja ein hoher Isolierwirkungsgrad erwünscht ist, d. h. je größer der Abstand der Eigenfrequenz zur Anregefrequenz ist, ist der weiche Übergang von immensen Vorteil. Es kann nämlich damit den durch die Prüflinge entstehenden verschiedenen Eigenfrequenzen, die zu den verschiedensten Gestellresonanzen führen, immer wirksam entgegengewirkt werden.

Gemäß einem besonderen Merkmal der Erfindung erfolgt der weiche Übergang über ein über den kompletten Durchflußbereich kontinuierlich regelbares Hydrauliksystem. Dadurch ergibt sich der Vorteil, daß im Rauschbetrieb, in dem Schubkräfte mit allen Frequenzen auftreten, jedoch pro Frequenzband nicht die volle Sinusschubkraft wirkt, die angeregte Frequenz abgedämpft werden kann.

Eine Ausgestaltung der Erfindung ist darin zu sehen, daß der Magnetkörper mit zwei diametral gegenüberliegenden Mittelstücken versehen ist, die in Ausnehmungen der Gestellwange gelagert sind, daß jedes Mittelstück im Bereich dieser Lagerung diametral gegenüberliegende gegen die Gestellwange wirkende Kolben aufweist und die zur Mittelachse des Mittelstückes liegenden Zylinder dieser Kolben mit einer absperrbaren Leitung verbunden sind, wobei die Zylinder und die Leitung mit Hydraulikflüssigkeit, vorzugsweise Öl gefüllt sind. Mit dieser konstruktiven Ausgestaltung ist in einfachster Weise das oben beschriebene Grundprinzip wirtschaftlich verwirklichbar. Wird die Leitung die die beiden Zylinder verbindet, unterbrochen, d. h. abgesperrt, wirkt der Ölpolster als kraftübertragendes Element zwischen Mittelstück und Sperrkolben zur Gestellwange. Das tief abgestimmte Federsystem ist somit überbrückt. Die Überbrückung wird dadurch gelöst, daß sich die zwei gekammerten Ölvolumen, die bisher als kraftübertragendes Element wirkten, durch Öffnung der Verbindungsleitung ausgleichen können und somit keine Kräfte mehr übertragen.

Gemäß einer weiteren Ausgestaltung der Erfindung erfolgt die Absperrung der Leitung über ein Sitzventil. Mit diesem betriebssicheren, einfachen und daher kostengünstigen Maschinenelement ist eine kontinuierliche Durchflußregelung gewährleistet.

Nach einer weiteren besonderen Ausgestaltung der Erfindung ist das Mittelstück ein Wellenstummel und die Ausnehmung der Gestellwange kreisrund. Dadurch kann der Arbeitstisch mit dem Magnetkörper von seiner vertikalen Betriebsstellung in die horizontale Betriebsstellung gekippt werden.

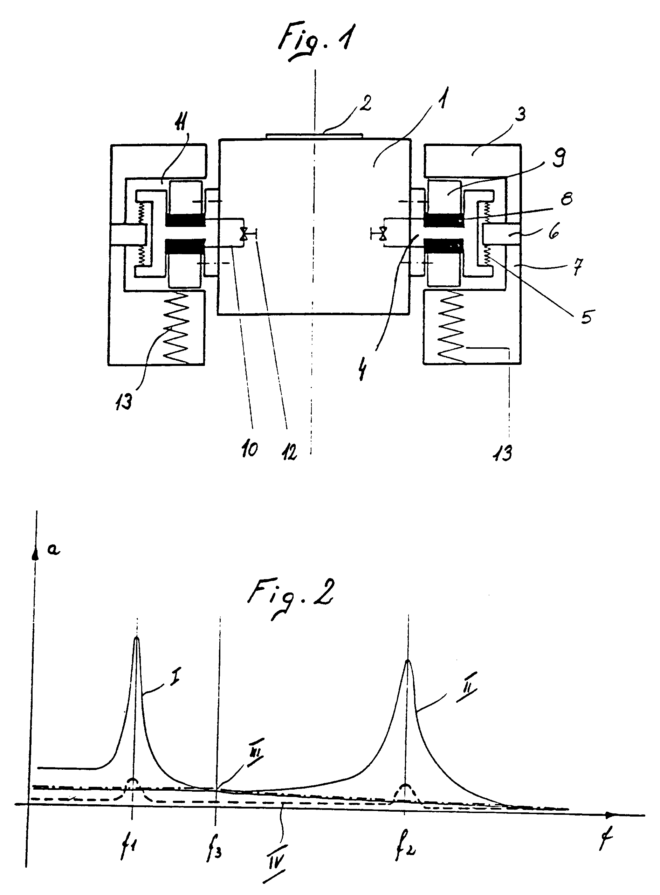

Die Erfindung wird an Hand von Ausführungsbeispielen, die in der Zeichnung dargestellt sind, näher erläutert. Fig. 1 zeigt den schematischen Aufbau eines Schwingerregers und Fig. 2 ein Diagramm des Resonanzverhalten des Magnetkörpers in seinem Gestell.

Gemäß Fig. 1 ist schematisch ein Schwingerreger dargestellt, wobei der Magnetkörper 1 den Arbeitstisch 2 aufweist, Der Magnetkörper 1 ist in den Gestellwangen 3, des Gestells gelagert. Zu dieser Lagerung bzw. Aufhängung weist der Magnetkörper 1 zwei Mittelstücke 4 auf, die über Federn 5, beispielsweise Luftfedern, Stahlfedern od. dgl. mit dem Schwenkzapfen 6 verbunden sind. Der Schwenkzapfen 6 sitzt im Lagerschild 7 das mit der Gestellwange 3 fix verbunden ist. Diese Aufhängung entspricht einem tief abgestimmten Federsystem, welches, wie noch später aufgezeigt wird, im unteren Betriebsfrequenzbereich seine Resonanzfrequenz besitzt.

Um nun diese Gestellresonanz aussparen zu können, wird diesem tief abgestimmten Federsystem ein weiteres hoch abgestimmtes Federsystem überlagert. Dadurch ist es möglich, im unteren Frequenzbereich in praktisch starrer Verbindung des Magnetkörpers 1 mit der seismischen Masse die gleich dem Gestell ist, zu fahren.

Erreicht wird dies dadurch, daß die Mittelstücke 4 Bohrungen 8 für Ölkammern, die von Sperrkolben 9 begrenzt sind, aufweisen. Durch eine Leitung 10 sind die Ölkammern 8 untereinander verbunden. Die Sperrkolben 9 werden durch den Öldruck der immer gegeben ist, gegen die Ausnehmung 11 in der Gestellwange 3 gedrückt.

Ist nun diese Leitung 10 durch beispielsweise ein Ventil 12 verschlossen, übertragen die gekammerten Ölvolumen die Reaktionskräfte direkt ins Gestell, was symbolhaft durch die eingezeichnete Feder 13 dargestellt wurde. Diese Aufhängung entspricht einem hoch abgestimmten Federsystem, daß durch das Ventil 12 zu- oder abschaltbar ist und bei einer Zuschaltung das tief abgestimmte Federsystem überbrückt.

Ist jedoch die Leitung 10 offen, so können die Ölkammern natürlich keine Kräfte übertragen, und das tief abgestimmte Federsystem kommt zum Tragen.

Gemäß der Fig. 2 ist in Diagrammform über die Frequenz f die Amplitude a dargestellt. Aus diesem Diagramm ist ersichtlich daß bei der Frequenz f₁ das tief abgestimmte Federsystem die Resonanzfrequenz mit der größten Amplitude aufweist. Die Kurve ist mit I bezeichnet. Gemäß der Kurve II ist der Frequenzgang des hoch abgestimmten Federsystems dargestellt. Diese Resonanzfrequenz liegt bei der Frequenz f₂.

Um nun einen idealen Sinusbetrieb - dargestellt durch die strichpunktierte Linie III - des Schwingerregers zu erreichen, wird bei der Umschaltfrequenz f₃ das hoch abgestimmte Federsystem weggeschaltet.

Die strichlierte Linie IV zeigt den Rauschbetrieb auf, in dem Schubkräfte mit allen Frequenzen auftreten, jedoch pro Frequenzband nicht die volle Sinusschubkraft wirkt. Die im Rauschbetrieb angeregte Resonanz kann mit einer Drossel in der Leitung 10 abgedämpft werden.

## Patentansprüche

1. Schwingerreger, der einen Magnetkörper mit Feldspulen aufweist, in dem der Arbeitstisch mit der Schwingspule, die von einem Leistungsverstärker mit Energie versorgt wird, in einem Gestell angeordnet ist, wobei der Magnetkörper über ein tief abgestimmtes Federsystem mit dem Gestell verbunden ist, dadurch gekennzeichnet, daß der Magnetkörper über ein weiteres hoch abgestimmtes Federsystem (8, 9, 10, 12) mit dem Gestell verbunden ist und daß dieses Federsystem (8, 9, 10, 12) zu- oder abschaltbar ist.

2. Schwingerreger nach Anspruch 1, dadurch gekennzeichnet, daß die Zu- bzw. Abschaltung des hoch abgestimmten Federsystems (8, 9, 10, 12) im weichen, mechanisch geräuschlosen Übergang erfolgt.

3. Schwingerreger nach Anspruch 1 oder 2, dadurch gekennzeichnet, daß der weiche Übergang über ein über den kompletten Durchflußbereich kontinuierlich regelbares Hydrauliksystem erfolgt.

4. Schwingerreger nach einem der Ansprüche 1 bis 3, dadurch gekennzeichnet, daß der Magnetkörper (1) mit zwei diametral gegenüberliegenden Mittelstücken (4) versehen ist, die in Ausnehmungen (11) der Gestellwange (3) gelagert sind, daß jedes Mittelstück (4) im Bereich dieser Lagerung diametral gegenüberliegende gegen die Gestellwange (3) wirkende Kolben (9) aufweist und die zur Mittelachse des Mittelstückes (4) liegenden Zylinder (8) dieser Kolben (9) mit einer absperrbaren Leitung (10) verbunden sind, wobei der Zylinder (8) und die Leitung (10) mit Hydraulikflüssigkeit, vorzugsweise Öl gefüllt sind.

5. Schwingerreger nach Anspruch 4, dadurch gekennzeichnet, daß die Absperrung der Leitung (10) über ein Sitzventil (12) erfolgt.

6. Schwingerreger nach einem der Ansprüche 4 oder 5, dadurch gekennzeichnet, daß das Mittelstück (4) ein Wellenstummel und die Ausnehmung (11) der Gestellwange (8) kreisrund ist.

## Claims

1. A vibration exciter comprising a magnet body with field coils and in which the work table and the moving coil, which is supplied with energy via a power amplifier, are disposed in a frame, the magnet body being connected to the frame by a low-tuned spring system, characterised in that the magnet body is connected to the frame by an additional high-tuned spring system (8, 9, 10, 12) and the last-mentioned spring system (8, 9, 10, 12) can be switched on or off.

2. A vibration exciter according to claim 1, characterised in that the high-tuned spring system (8, 9, 10, 12) is switched on or off in a soft, mechanically noiseless transition.

3. A vibration exciter according to claim 1 or 2, characterised in that the soft transition is made via a hydraulic system continuously adjustable over the entire flow range.

4. A vibration exciter according to any of claims 1 to 3, characterised in that the magnet body (1) has two diametrically opposite centre portions (4) mounted in recesses (11) in the side (3) of the frame, each centre portion (4) in the mounting region has diametrically opposite pistons (9) acting against the side (3) of the frame, and the cylinders (8) of the pistons (9), which lie towards the central axis of the centre portion (4), are connected to a blockable line (10), the cylinder (8) and the line (10) being filled with hydraulic fluid, preferably oil.

5. A vibration exciter according to claim 4, characterised in that the line (10) is blocked via a seat valve (12).

6. A vibration exciter according to claim 4 or 5, characterised in that the centre portion (4) is a stub shaft and the recess (11) in the side (8) is circular.

## Revendications

1. Générateur d'oscillations qui comprend un corps magnétique muni de bobines de champ, à l'intérieur duquel la table de travail comportant la bobine oscillante qui est alimentée en énergie par un amplificateur de puissance est disposée dans un bâti, ledit corps magnétique étant relié audit bâti par un système à ressorts à syntonisation basse, caractérisé en ce que le corps magnétique est relié au bâti par un autre système à ressorts (8, 9, 10, 12) à syntonisation haute et en ce que ce système à ressorts (8, 9, 10, 12) peut être enclenché ou déclenché.

2. Générateur d'oscillations selon la revendication 1, caractérisé en ce que l'enclenchement ou le déclenchement du système à ressorts (8, 9, 10, 12) à syntonisation haute s'effectue en un passage souple, mécaniquement insonore.

3. Générateur d'oscillations selon la revendication 1 ou 2, caractérisé en ce que le passage souple est assuré par un système hydraulique réglable en continu sur la zone complète du passage du flux.

4. Générateur d'oscillations selon l'une quelconque des revendications 1 à 3, caractérisé en ce que le corps magnétique (1) est muni de deux pièces centrales (4) disposées face à face diamétralement qui sont logées dans des encoches (11) de la joue (3) du bâti, en ce que chaque pièce centrale (4) présente, à proximité de ce logement, des pistons (9) disposés face à face diamétralement et dont l'action s'oppose à la joue (3), les cylindres (8) de ces pistons (9), cylindres situés à proximité de l'axe de la pièce centrale (4), étant reliés à une conduite verrouillable (10), ledit cylindre (8) et ladite conduite (10) étant remplis d'un liquide hydraulique, de préférence de l'huile.

5. Générateur d'oscillations selon la revendication 4, caractérisé en ce que le verrouillage de la conduite (10) s'effectue par une vanne à siège (12).

6. Générateur d'oscillations selon la revendication 4 ou 5, caractérisé en ce que la pièce centrale (4) est un moignon d'arbre et que l'encoche,(11) de la joue (8) du bâti est de forme circulaire.
